# EUROPÄISCHE PATENTSCHRIFT

(11) **EP 2 722 263 B1**
(45) Veröffentlichungstag und Bekanntmachung des Hinweises auf die Patenterteilung: **17.05.2017**
(21) Anmeldenummer: 13188443.9
(22) Anmeldetag: 14.10.2013
(51) Int. Cl.: B62D 59/04, B60P 3/36

(54) **Rangierantrieb mit Freigabeleitung**
Manoeuvring drive with release cable
Entraînement de manoeuvre pour ligne d'activation

(30) Priorität: 22.10.2012 DE 202012010076 U
(43) Veröffentlichungstag der Anmeldung: 23.04.2014
(73) Patentinhaber: Truma Gerätetechnik GmbH & Co. KG, 85640 Putzbrunn (DE)
(72) Erfinder: Aemisegger, Steve, 81547 München (DE); Gumpp, Daniel, 86356 Neusäss (DE); Müller, Jochen, 85665 Moosach (DE); Schmid, Tobias, 85435 Erding (DE); Müssler, Klaus, 85235 Egenburg (DE); Fernandez, Ana María, 81739 München (DE); Müller, Jörg, 85658 Egmating (DE); Schaurer, Oliver, 85445 Oberding (DE); Möhring, Mario, 85408 Gammelsdorf (DE); Venschott, Mathias, 81825 München (DE); Thiel, Stefan, 83022 Rosenheim (DE); Zawadski, Kamil, 85540 Haar (DE)
(74) Vertreter: Prinz & Partner mbB

(56) Entgegenhaltungen:
- EP-A1- 2 336 011
- EP-A2- 1 225 090
- EP-A2- 1 679 251
- EP-A2- 1 826 107
- DE-U1-202009 005 524
- DE-U1-202010 005 650

## Beschreibung

Die Erfindung betrifft einen Rangierantrieb für einen Anhänger, mit einer Zentraleinheit und mindestens zwei Antriebseinheiten, die Rädern des Anhängers zugeordnet sind.

Bei diesem Anhänger kann es sich beispielsweise um einen Wohnwagen, einen Bootsanhänger, einen Pferdeanhänger, einen Marktanhänger oder Ähnliches handeln. Dieser wird üblicherweise von einer Zugmaschine gezogen. Für einen Wohnwagen dient meist ein Pkw als Zugmaschine. Um den Anhänger in seine endgültige Position zu bringen, beispielsweise auf einem Campingplatz, wird er üblicherweise von der Zugmaschine abgekoppelt und von Hand in die endgültige Position geschoben. Dies ist oft aber mit größeren Anstrengungen verbunden, da mit steigenden Anforderungen an den Komfort solcher Wohnwagen auch deren Gewicht steigt.

Um das Rangieren zu erleichtern, können Anhänger mit Rangierantrieben ausgestattet werden. Bei einem Rangierantrieb handelt es sich um einen Hilfsantrieb, der meist für jedes Rad des Anhängers eine Antriebseinheit mit einem Elektromotor aufweist. Die Elektromotoren werden von einer Batterie im Anhänger mit elektrischer Energie versorgt und können mit den Rädern des Anhängers gekoppelt werden, um diese anzutreiben und damit den Anhänger zu rangieren.

Ein wesentlicher Gesichtspunkt bei einem solchen Rangierantrieb ist die Betriebssicherheit. So muss beispielsweise gewährleistet sein, dass die Antriebseinheiten nur dann aktiviert werden, wenn dies vom Bediener zum Rangieren des Anhängers auch angefordert wird. Weiterhin muss gewährleistet sein, dass ein Anschwenkmotor, mit dem eine Andruckrolle der Antriebseinheit in Eingriff mit einem zugeordneten Reifen des Anhängers gebracht werden kann, nur dann betätigt wird, wenn dies gewünscht wird. Andernfalls könnte der Anhänger plötzlich gebremst werden, während er von einer Zugmaschine gezogen wird, oder sich unbeabsichtigt in Bewegung setzen, falls während des Rangierens die Andruckrolle vom Rad gelöst wird.

Ein Rangierantrieb der eingangs genannten Art ist aus der gattungsgemäßen EP 1 826 107 A1 bekannt. Bei ihm wird an die Antriebsmotoren eine pulsweitenmodulierte Antriebsspannung angelegt, um die Antriebsmotoren mit einer variablen Geschwindigkeit betreiben zu können.

Aus der EP 1 679 251 A1 ist ein Rangierantrieb bekannt, bei dem die Antriebsmotoren mit unterschiedlichen Geschwindigkeiten betrieben werden können, so dass der vom Rangierantrieb angetriebene Anhänger eine Kurve fahren kann. Es ist weiterhin erwähnt, dass Sicherheitsmerkmale vorgesehen sein können. Diese können gewährleisten, dass die Andruckrollen jeder Antriebseinheit nur dann angetrieben werden können, nachdem sie mit dem zugehörigen Rad in Eingriff gebracht wurden. Die Sicherheitsmerkmale können auch gewährleisten, dass die Andruckrollen nur dann mit den Rädern in Eingriff sind, wenn der Anhänger nicht mit einer Zugmaschine gekoppelt sind. Technische Einzelheiten zu den Sicherheitsmerkmalen sind jedoch nicht erläutert.

Die Aufgabe der Erfindung besteht darin, einen Rangierantrieb für einen Anhänger dahingehend weiterzubilden, dass sich eine erhöhte Betriebssicherheit ergibt.

Zur Lösung dieser Aufgabe ist erfindungsgemäß bei einem Rangierantrieb der eingangs genannten Art zwischen der Zentraleinheit und jeder Antriebseinheit eine Freigabeleitung vorgesehen, über die ein pulsweitenmoduliertes Freigabesignal zum Freischalten der Antriebseinheiten übertragen werden kann. Die Erfindung beruht auf dem Grundgedanken, ein Freigabesignal zu verwenden, welches vergleichsweise komplex ist, so dass mit an Sicherheit grenzender Wahrscheinlichkeit ausgeschlossen ist, dass versehentlich, beispielsweise bei einem Defekt der Zentraleinheit, von dieser ein Signal übertragen wird, das zufällig einem Freigabesignal entspricht.

Vorzugsweise ist vorgesehen, dass ein Modulationsgrad von 0 % und von 100 % von der Antriebseinheit als Sperrsignal interpretiert wird. Diese beiden Werte des Modulationsgrades werden als Kurzschlussdetektion verwendet und führen dazu, dass die Antriebseinheiten in einem Sperrzustand verbleiben, also weder der Antriebsmotor noch der Anschwenkmotor freigegeben sind.

Erfindungsgemäß ist vorgesehen, dass ein erster Modulationsgrad, der zwischen 0 % und 100 % liegt und beispielsweise 25 % betragen kann, von der Antriebseinheit als ein erster Freischaltzustand interpretiert wird. Im ersten Freischaltzustand sind beispielsweise nur der Antriebsmotor der Antriebseinheit und die Motorbremse freigegeben. Dadurch kann der Anhänger mittels der Antriebseinheit verfahren werden. Es ist jedoch verhindert, dass unbeabsichtigt der Anschwenkmotor angesteuert wird und beispielsweise die Andruckrolle vom ihr zugeordneten Rad des Anhängers gelöst wird.

Vorzugsweise wird ein zweiter Modulationsgrad, der sich vom ersten unterscheidet und ebenfalls zwischen 0 % und 100 % liegt, von der Antriebseinheit als ein zweiter Freischaltzustand interpretiert. Der zweite Modulationsgrad kann beispielsweise in der Größenordnung von 80 % liegen, und er gibt zusätzlich zum Antriebsmotor und der Motorbremse auch den Anschwenkmotor der Antriebseinheit frei. Nur wenn dieser Modulationsgrad von der Antriebseinheit empfangen wird, ist es möglich, die Antriebsrolle in Eingriff mit dem ihr zugeordneten Rad des Anhängers zu bringen bzw. sie vom Rad zu lösen.

Das Freigabesignal kann beispielsweise mit einer Frequenz von 2 kHz moduliert werden.

Die Erfindung wird nachfolgend anhand einer Ausführungsform beschrieben, die in den beigefügten Zeichnungen dargestellt ist. In diesen zeigen:
- Figur 1 in einer schematischen Seitenansicht einen Anhänger mit Rangierantrieb; und
- Figur 2 in einer schematischen Draufsicht den Anhänger von Figur 1.

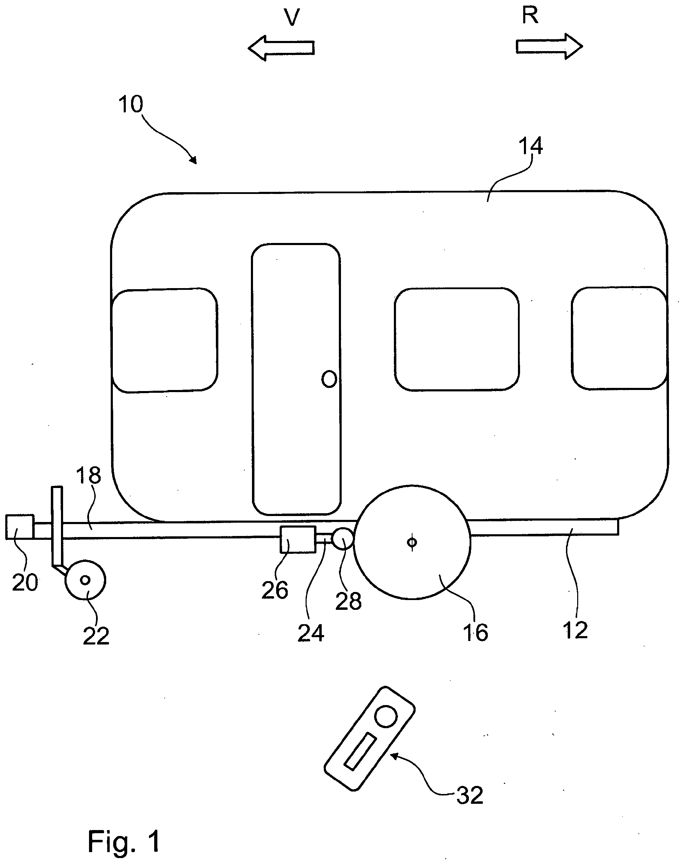

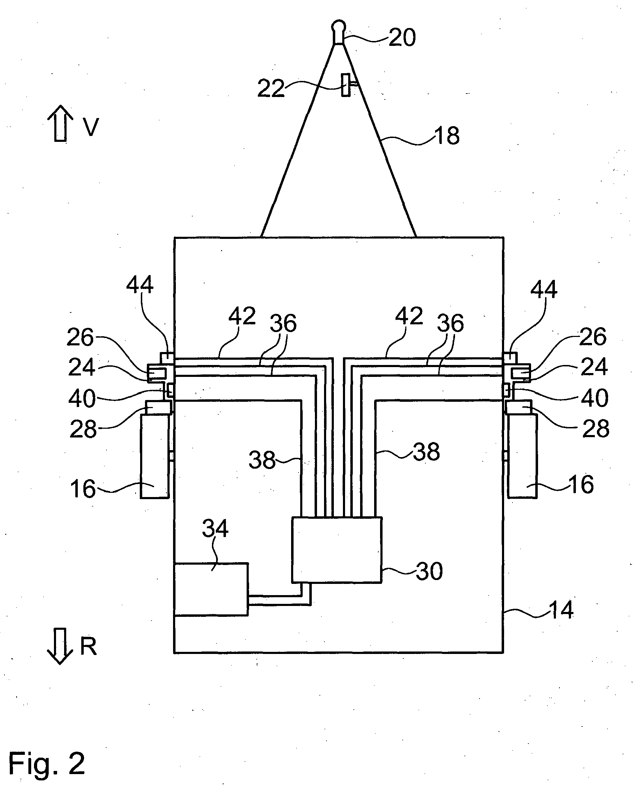

In den Figuren 1 und 2 ist schematisch ein Anhänger 10 (hier ein Wohnwagen) gezeigt, der einen Rahmen 12 aufweist, an dem ein Aufbau 14 angebracht ist. Weiterhin sind zwei Räder 16, eine Deichsel 18 und eine Kupplung 20 vorgesehen. Mit der Kupplung 20 kann der Anhänger 10 an eine Zugmaschine angekoppelt werden. An der Deichsel 18 ist ein Hilfsrad 22 angebracht, welches im abgekoppelten Zustand zum Abstützen des Anhängers 10 dient.

Jedem Rad 16 des Anhängers 10 ist eine Antriebseinheit 24 zugeordnet. Jede Antriebseinheit 24 weist einen Antriebsmotor 26 auf, der üblicherweise als Elektromotor ausgeführt ist, sowie eine Antriebsrolle 28, die vom Antriebsmotor 26 angetrieben werden kann. Die Antriebsrolle 28 kann mit dem zugeordneten Rad 16 des Anhängers 10 in Eingriff gebracht werden.

Der Antriebsmotor 26 weist eine integrierte Haltebremse auf, die hier nicht weiter dargestellt ist. Die Haltebremse ist im nicht betätigten Zustand geschlossen und muss aktiv angesteuert und freigegeben werden, damit der Rotor des Antriebsmotors sich drehen kann.)

Weiterhin ist eine Zentraleinheit 30 vorgesehen, die als zentrale Steuerung für die Antriebseinheiten 24 dient und auch für die Kommunikation mit einem Bediener zuständig ist. Dieser kann beispielsweise über eine schematisch in Figur 1 gezeigte Fernbedienung 32 beispielsweise eine Geradeausfahrt oder eine Kurvenfahrt vorgeben.

Im Anhänger 10 ist außerdem eine Spannungsquelle 34 vorgesehen, mittels der die Zentraleinheit 30 und die Antriebseinheiten 24 mit elektrischer Energie versorgt werden können. Die Spannungsquelle kann ein Netzteil sein, das an eine externe Steckdose angeschlossen ist, oder ein Energiespeicher, der sich an Bord des Anhängers befindet. In diesem Fall handelt es sich beim Energiespeicher 34 üblicherweise um einen Akkumulator, umgangssprachlich oft auch als Batterie bezeichnet. Die Antriebsmotoren 26 sind dabei über Anschlussleitungen 36 mit der Zentraleinheit verbunden. Ferner ist für jede Antriebseinheit mindestens eine Steuerleitung 38 vorgesehen, die sich von der Zentraleinheit 30 zu jeder Antriebseinheit 24 erstreckt.

Die Antriebseinheiten 24 zusammen mit der Zentraleinheit 30 bilden einen Rangierantrieb, mit dem der Anhänger 10 verfahren werden kann. Zu diesem Zweck werden die Antriebsrollen 28 in Eingriff mit den Rädern 16 des Anhängers gebracht, sodass sie, wenn sich die Antriebsmotoren 26 drehen, die Räder 16 antreiben. Dies ist grundsätzlich aus dem Stand der Technik bekannt.

Als Ausführungsbeispiel ist hier ein einachsiger Anhänger gezeigt. Dementsprechend weist der Anhänger 10 zwei Räder 16 auf, denen jeweils eine Antriebseinheit 24 zugeordnet ist. Grundsätzlich kann derselbe Rangierantrieb auch bei einem zweiachsigen Anhänger eingesetzt werden. Dabei können weiterhin insgesamt lediglich zwei Antriebseinheiten verwendet werden, sodass auf jeder Seite des Anhängers ein angetriebenes und ein nicht angetriebenes Rad vorhanden ist, oder es können auf jeder Seite des Anhängers zwei Antriebseinheiten eingesetzt werden, sodass jedes Rad des Anhängers angetrieben werden kann.

Jede Antriebseinheit 24 weist einen Anschwenkmotor 40 auf, der ebenfalls von der Zentraleinheit 30 angesteuert wird. Mittels des Anschwenkmotors 40 kann die Antriebsrolle 28 jeder Antriebseinheit 24 zwischen einem Ausgangszustand, in welchem sie sich im Abstand vom ihr zugeordneten Rad 16 befindet, und einem aktivierten Zustand verschwenkt werden, in der sie mit dem Rad 16 in Eingriff ist und dieses antreiben kann.

Zwischen der Zentraleinheit 30 und jeder Antriebseinheit 24 erstreckt sich eine Freigabeleitung 42, die hier als separate Leitung ausgeführt ist. Über die Freigabeleitung wird ein pulsweitenmoduliertes Freigabesignal von der Zentraleinheit 30 auf die entsprechende Antriebseinheit 24 übertragen. Dieses wird von einer Auswerteeinheit 44 interpretiert, die an jeder Antriebseinheit 24 vorgesehen ist. Dabei wird ein Modulationsgrad von 0 % und 100 % als Sperrsignal interpretiert. In diesem Fall bleibt die Haltebremse des Antriebsmotors 26 geschlossen, und sowohl der Antriebsmotor 26 als auch der Anschwenkmotor 40 sind nicht freigegeben. Selbst wenn von der Zentraleinheit 30 über die Steuerleitungen 38 ein Ansteuersignal an die Antriebseinheiten 24 gesendet würde, würden diese nicht reagieren.

Die Zentraleinheit 30 kann über die Freigabeleitungen 42 zwei verschiedene Freigabesignale übertragen, die sich durch den Modulationsgrad des pulsweitenmodulierten Freigabesignals unterscheiden. Ein erstes Freigabesignal kann dazu führen, dass der Antriebsmotor 26 einschließlich der Motorbremse freigegeben wird, jedoch der Anschwenkmotor 40 weiterhin gesperrt bleibt. Ein zweites Freigabesignal führt dazu, dass sowohl der Antriebsmotor 26 als auch der Anschwenkmotor 40 von der Zentraleinheit 30 angesprochen werden können.

Für die beiden Freigabesignale werden unterschiedliche Modulationsgrade verwendet, die sich deutlich voneinander unterscheiden und von der Auswerteeinheit 44 eindeutig erkannt werden können. Beispielsweise wird für das erste Freigabesignal bzw. den ersten Freischaltzustand ein Modulationsgrad in der Größenordnung von 25 % verwendet, und für das zweite Freigabesignal bzw. den zweiten Freischaltzustand wird ein zweiter Modulationsgrad in der Größenordnung von 80 % verwendet. Dabei kann das Freigabesignal beispielsweise mit einer Frequenz von 2 kHz aufmoduliert werden.

In Figur 2 ist eine separate Freigabeleitung 42 gezeigt. Es ist grundsätzlich auch denkbar, als Freigabeleitung beispielsweise die Anschlussleitungen 36 zu verwenden und auf diese das Freigabesignal aufzumodulieren.

Über die hier beschriebenen beiden Modulationsgrade hinaus können auch mehr als zwei Modulationsgrade verwendet werden.

## Patentansprüche

1. Rangierantrieb (24, 30) für einen Anhänger (10), mit einer Zentraleinheit und mindestens zwei Antriebseinheiten (24), die Rädern (16) des Anhängers (10) zugeordnet sind, wobei zwischen der Zentraleinheit (30) und jeder Antriebseinheit (24) eine Freigabeleitung (42) vorgesehen ist über die mindestens ein pulsweitenmoduliertes Freigabesignal zum Freischalten der Antriebseinheiten übertragen werden kann sich **dadurch gekennzeichnet, daß** das Freigabesignal von einem Ansteuersignal zum Ansteuern der Antriebseinheiten unterscheidet.

2. Rangierantrieb nach Anspruch 1, **dadurch gekennzeichnet, dass** ein Modulationsgrad von 0% und von 100% von der Antriebseinheit als Sperrsignal interpretiert wird.

3. Rangierantrieb nach Anspruch 1 oder Anspruch 2, **dadurch gekennzeichnet, dass** ein erster Modulationsgrad, der zwischen 0% und 100% liegt, von der Antriebseinheit als ein erster Freischaltzustand interpretiert wird.

4. Rangierantrieb nach Anspruch 3, **dadurch gekennzeichnet, dass** der erste Modulationsgrad in der Größenordnung von 25 % liegt.

5. Rangierantrieb nach einem der Ansprüche 3 und 4, **dadurch gekennzeichnet, dass** im ersten Freischaltzustand nur Antriebsmotor (26) und Motorbremse der Antriebseinheiten (24) freigegeben sind.

6. Rangierantrieb nach einem der Ansprüche 3 bis 5, **dadurch gekennzeichnet, dass** ein zweiter Modulationsgrad, der sich vom ersten unterscheidet und ebenfalls zwischen 0 % und 100 % liegt, von der Antriebseinheit als ein zweiter Freischaltzustand interpretiert wird.

7. Rangierantrieb nach Anspruch 6, **dadurch gekennzeichnet, dass** der zweite Modulationsgrad in der Größenordnung von 80 % liegt.

8. Rangierantrieb nach einem der Ansprüche 6 und 7, **dadurch gekennzeichnet, dass** im zweiten Freischaltzustand auch ein Anschwenkmotor (40) der Antriebseinheit freigegeben ist.

9. Rangierantrieb nach einem der vorhergehenden Ansprüche, **dadurch gekennzeichnet, dass** das Freigabesignal mit einer Frequenz von 2 kHz moduliert wird.

## Claims

1. A maneuvering drive (24, 30) for a trailer (10), comprising a central unit and at least two drive units (24) which are associated with wheels (16) of the trailer (10), wherein an enable line (42) via which at least one pulse width modulated enabling signal can be transmitted for activating the drive units is provided between the central unit (30) and each drive unit (24), **characterized in that** the enabling signal differs from an actuating signal for actuating the drive units.

2. The maneuvering drive according to claim 1, **characterized in that** a degree of modulation of 0% and of 100% is interpreted as a disabling signal by the drive unit.

3. The maneuvering drive according to claim 1 or claim 2, **characterized in that** a first degree of modulation, which is between 0% and 100%, is interpreted as a first activation state by the drive unit.

4. The maneuvering drive according to claim 3, **characterized in that** the first degree of modulation is on the order of 25%.

5. The maneuvering drive according to either of claims 3 and 4, **characterized in that** in the first activation state only the drive motor (26) and the motor brake of the drive units (24) are enabled.

6. The maneuvering drive according to any of claims 3 to 5, **characterized in that** a second degree of modulation, which differs from the first one and is likewise between 0% and 100%, is interpreted as a second activation state by the drive unit.

7. The maneuvering drive according to claim 6, **characterized in that** the second degree of modulation is on the order of 80%.

8. The maneuvering drive according to either of claims 6 and 7, **characterized in that** in the second activation state a swivel motor (40) of the drive unit is also enabled.

9. The maneuvering drive according to any of the preceding claims, **characterized in that** the enabling signal is modulated at a frequency of 2 kHz.

## Revendications

1. Entraînement de manoeuvre (24, 30) pour remorque (10), comportant une unité centrale et au moins deux unités d'entraînement (24) associées à des roues (16) de la remorque (10), une ligne de libération (42) étant prévue entre l'unité centrale (30) et chaque unité d'entraînement (24), par l'intermédiaire de laquelle il est possible de transmettre au moins un signal de libération modulé en largeur d'impulsion pour le déblocage des unités d'entraînement, **caractérisé en ce que** le signal de libération est différent d'un signal de pilotage pour le pilotage des unités d'entraînement.

2. Entraînement de manoeuvre selon la revendication 1, **caractérisé en ce qu'**un taux de modulation de 0 % et de 100 % est interprété par l'unité d'entraînement comme signal d'arrêt.

3. Entraînement de manoeuvre selon la revendication 1 ou la revendication 2, **caractérisé en ce qu'**un premier taux de modulation compris entre 0 % et 100 % est interprété par l'unité d'entraînement comme premier état de déblocage.

4. Entraînement de manoeuvre selon la revendication 3, **caractérisé en ce que** le premier taux de modulation est de l'ordre de grandeur de 25 %.

5. Entraînement de manoeuvre selon l'une des revendications 3 et 4, **caractérisé en ce que** dans le premier état de déblocage, seuls le moteur d'entraînement (26) et le frein moteur des unités d'entraînement (24) sont libérés.

6. Entraînement de manoeuvre selon l'une des revendications 3 à 5, **caractérisé en ce qu'**un deuxième taux de modulation qui est différent du premier et est également compris entre 0% et 100% est interprété par l'unité d'entraînement comme deuxième état de déblocage.

7. Entraînement de manoeuvre selon la revendication 6, **caractérisé en ce que** le deuxième taux de modulation est de l'ordre de grandeur de 80 %.

8. Entraînement de manoeuvre selon l'une des revendications 6 et 7, **caractérisé en ce que** dans le deuxième état de déblocage, un moteur pivotant (40) de l'unité d'entraînement est également libéré.

9. Entraînement de manoeuvre selon l'une des revendications précédentes, **caractérisé en ce que** le signal de libération est modulé avec une fréquence de 2 kHz.
